# EUROPÄISCHE PATENTANMELDUNG

(11) **EP 3 135 098 A1**
(43) Veröffentlichungstag der Anmeldung: **01.03.2017**
(21) Anmeldenummer: 16186468.1
(22) Anmeldetag: 31.08.2016
(51) Int. Cl.: A01D 78/04

(54) **KAMMSCHWADER**

(30) Priorität: 31.08.2015 DE 102015114506
(71) Anmelder: Brielmaier, Martin, 88048 Friedrichshafen (DE)
(72) Erfinder: Brielmaier, Martin, 88048 Friedrichshafen (DE)
(74) Vertreter: Patentanwälte und Rechtsanwalt Weiß, Arat & Partner mbB

(57) **Zusammenfassung**

Kammschwader (1) mit einem Maschinenrahmen (6), wobei in dem Maschinenrahmen (6) ein erstes rotierendes Funktionselement (2.1) angeordnet ist, wobei das erste Funktionselement (2.1) zu dem Maschinenrahmen (6) in einer ersten Schrägposition gelagert ist, wobei eine zweite Schrägposition einstellbar ist.

## Beschreibung

### Technisches Gebiet

Die Erfindung betrifft einen Kammschwader nach dem Oberbegriff des Anspruchs 1 sowie eine Verwendung dessen nach Anspruch 8.

### Stand der Technik

In der Landwirtschaft und dort insbesondere bei der Bearbeitung von Halmgut kommen sogenannte Kammschwader zu Einsatz. Kammschwader werden hierzu in der Regel an eine Antriebsmaschine, wie beispielsweise einen Traktor oder einen Einachgeräteträger angeschlossen.

Das Arbeitssystem der Kammschwader basiert auf schräg gestellten Funktionselementen, die über meist mehrere mit Zinken ausgestattete Streben verbunden sind. Durch Rotation der Funktionselemente und die Bewegung der Streben bzw. der Zinken, wird auf einer landwirtschaftlichen Fläche befindliches und bereits geschnittenes Halmgut seitlich bewegt und aufgeschichtet bzw. in so genannte Schwaden gerecht.

Altbekannter Nachteil von Kammschwadern ist, dass das zu bewegende geschnittene Halmgut durch die feste Stellung der Funktionselemente nur in eine Richtung befördert bzw. geschwadet werden kann. Aufgrund dieser einseitigen Arbeitsrichtung ist es nötig den Kammschwader entweder in einer Kreisbewegung auf der landwirtschaftlichen Fläche zu bewegen oder in vor- und rückwärtiger Fahrtrichtung zu fahren, da sonst das Halmgut auf die noch nicht befahrene Seite der zu bearbeitenden landwirtschaftlichen Fläche geschwadet würde. Vergleichbar ist dieses Problem mit der ebenfalls einseitigen Auswurfsrichtung von üblichen Gartenrasenmähern. Hier muss ebenfalls darauf geachtet werden, dass das geschnittene Gras nicht auf die Seite der Rasenfläche ausgeworfen wird, die noch nicht geschnitten wurde. Geschieht dies doch, wird die Funktion des Rasenmähers bzw. des Kammschwaders durch ständig steigende Menge des Materials (Gas bzw. Halmgut) eingeschränkt oder blockiert.

Daher werden Kammschwader häufig in einzelnen Arbeitsbahnen jeweils vor- und rückwärts gefahren, damit das zu schwadende Halmgut auf der bereits befahrenen Seite der landwirtschaftlichen Fläche geschwadet wird. Besonders das Rückwärtsfahren birgt jedoch Schwierigkeiten und damit Gefahren in der Handhabung. Zudem ist das Rückwärtsfahren meist deutlich langsamer als die Vorwärtsfahrt. Zum Teil müssen Flächenabschnitte sogar ohne Bearbeitung befahren werden, um die Schwaden entsprechend positionieren zu können. Dies kostet Zeit und erschwert besonders in anspruchsvollerem Gelände, wie zum Beispiel in Hanglagen, die Arbeit deutlich.

### Offenbarung der Erfindung

### Aufgabe

Aufgabe der Erfindung ist es einen Kammschwader zur Verfügung zu stellen der eine flexible und effiziente Anwendbarkeit aufweist. Dadurch sollen schwierige und zeitintensive Rangierfahrten und damit wertvolle Arbeitszeit gespart.

### Lösung der Aufgabe

Diese Aufgabe wird durch die Merkmale nach Anspruch 1 gelöst.

Ein erfindungsgemäßer Kammschwader weist einen Maschinenrahmen auf. Dabei umfasst der Maschinenrahmen ein erstes rotierendes Funktionselement. Dazu ist der Maschinenrahmen im Wesentlichen U-Förmig zu einem Boden oder weg von einer Antriebsmaschine ausgebildet. Zu einem Boden bedeutet, dass die Öffnung der U-Form zu dem Boden hin ausgerichtet ist. Weg von der Antriebsmaschine bedeutet, dass die Öffnung des U-Profils weg von einer Antriebsmaschine ausgebildet ist. Das erste Funktionselement ist dabei zu dem Maschinenrahmen in einer ersten Schrägposition gelagert. Das erfindungsgemässe Ausführungsbeispiel weist sich dabei dadurch aus, dass eine zweite Schrägposition einstellbar ist. Das erste Funktionselement ist hier rund oder mehreckig ausgebildet und rotierend angebracht.

Dies erfolgt dadurch, dass das erste Funktionselement des Kammschwaders in zwei unterschiedliche Schrägpositionen derart einstellbar sind, dass das zu schwadende Halmgut, in Fahrtrichtung gesehen, wahlweise zur rechten oder zur linken Seite ausgeworfen bzw. geschwadet werden kann. Dies hat den Vorteil, dass die Arbeitsfahrten durchgehend vorwärts erfolgen können und keine rückwärtigen Fahrten oder Fahrten in einer Kreisbewegung mehr notwendig sind. Dies ermöglicht schnelleres und vor allem sichereres Arbeiten ohne aufwendiges und zeitintensives rangieren.

Um die unterschiedlichen Schrägpositionen zu ermöglichen, sind Gelenke zwischen dem ersten Funktionselement und dem Maschinenrahmen angeordnet. Es werden vorzugsweise zwei entgegengesetzte seitliche Auswurfrichtungen durch die Schrägstellungen ermöglicht. Dabei ist es möglich, dass die Auswurfrichtung, in die das Halmgut befördert bzw. geschwadet wird, beidseitig auch in mehreren Auswurfswinkel ermöglicht wird.

Der erfindungsgemäße Kammschwader wird über übliche Kraftübertragungssysteme, wie Pneumatik-, Hydraulik- oder Wellensysteme, an eine landwirtschaftliche Antriebsmaschine angeschlossen. Dabei kann der Kammschwader zusätzlich zur Schrägstellung des ersten Funktionselements angewinkelt zu der Antriebsmaschine verbunden werden. Dies geschieht über ein dafür vorgesehenes Gelenk. Dies birgt den Vorteil, dass der Auswurfswinkel über die Stellung des ersten Funktionselements hinaus verändert werden kann, womit auf besondere Gegebenheiten der zu bearbeitenden Flächen reagiert werden kann.

Das erste Funktionselement wird über ein Umsetzgetriebe, welches über den Maschinenrahmen mit der Antriebsmaschine in Wirkverbindung steht, in Rotation versetzt.

Das erste Funktionselement weist eine Strebe auf. In der Regel ist das erste Funktionselement über mehrere Streben mit einem weiteren Funktionselement verbunden. Die Streben sind dabei in einem bevorzugten Ausführungsbeispiel im Wesentlichen randseitig an dem ersten Funktionselement und dem weiteren Funktionselement angeordnet. Wenn im Weiteren von beiden Funktionselementen berichtet wird, ist im Einzelnen von dem ersten Funktionselement und dem weiteren Funktionselement die Rede. In einem besonders bevorzugten Ausführungsbeispiel verbinden vier Streben die beiden Funktionselemente. Diese Streben sind zwischen den beiden Funktionselementen schwenkbar befestigt, so dass die Einstellung der unterschiedlichen Schrägpositionen der beiden Funktionselemente und damit die Wahl der Auswurfseite des Halmguts möglich ist. Dazu sind die Streben also derart an den beiden Funktionselemente angeordnet, dass sie eine Schwenkbewegung der beiden Funktionselemente von der ersten Schrägposition in die zweite Schrägposition erlauben.

Der Maschinenrahmen verfügt über ein Rad. Das Rad ist dabei derat angeordnet, dass es frei drehbar, der beispielsweise durch die Antriebsmaschine, vorgegebenen Richtung folgen kann. Dies erleichtert die Handhabung und entlastet die Wirkverbindung über das Gelenk zu der Antriebsmaschine. Einige Ausführungsbeispiele verfügen auch über ein zweites Rad, welches zusätzlich entlastende und stabilisierende Funktion erfüllt.

Über den Maschinenrahmen bzw. die Radaufhängung der Räder des Kammschwaders, kann der Kammschwader höhenjustiert werden. Dies hat den Vorteil, dass eine Anpassung an auch spezielle Bodenverhältnisse möglich ist. Es ist auch vorgesehen, dass die Höhenjustierung der Räder beispielsweise automatisch durch eine Stoßdämpfer und/oder Federlagerung erfolgen kann.

Die Streben, die die beiden Funktionselemente verbinden, weisen über ihre Länge austauschbare Zinken auf, die das Halmgut rechenartig befördern. Die Streben verfügen an der Seite an der sie mit den beiden Funktionselementen in Verbindung stehen über Gelenke. Diese Gelenke ermöglichen die Veränderung der Schrägstellung der Funktionselemente, so dass die Auswurfsrichtung des Halmguts gewechselt werden kann.

Die Zinken sind in einigen Ausführungsbeispielen aus Metall und laufen an ihrem Befestigungsansatz in eine Spiralfeder über. Es ist auch vorgesehen, dass die Zinken aus Kunststoff oder einer Kunststoffmischung bestehen.

Die Austauschbarkeit der unterschiedlichen Zinken ermöglicht die individuelle Anpassung an die zu bearbeitende landwirtschaftliche Fläche, sowie an das zu schwadende Halmgut. Dieses weist in Konsistenz und Beschaffenheit relevante Unterschiede auf. Beispielsweise sind für ein optimales Arbeitsergebnis bei nassem oder feuchten Halmgut andere Zinken vorteilhaft als bei weitgehend getrocknetem Halmgut. Ebenfalls spielt die Wahl der Zinken bei der zu bearbeitenden Menge des vorliegenden geschnittenen Halmgutes eine wesentliche Rolle.

Der Betrieb des erfindungsgemäßen Kammschwaders ist mit unterschiedlichen landwirtschaftlichen Antriebsmaschinen möglich. So etwa mit einem Einachsgeräteträger, einem Quad oder einem Traktor. Dabei kann der erfindungsgemäße Kammschwader von der entsprechenden Antriebsmaschine sowohl geschoben als auch gezogen werden. Dies macht den erfindungsgemäßen Kammschwader sehr flexibel und erleichtert und beschleunigt die zu tätigende landwirtschaftliche Arbeit.

### Figurenbeschreibung

Weitere Vorteile, Merkmale und Einzelheiten der Erfindung ergeben sich aus der nachfolgenden Beschreibung eines Ausführungsbespiel anhand einer Figur. Diese zeigt
eine stark schematisierte Ansicht von oben auf ein Ausführungsbeispiel eines erfindungsgemäßen schwenkbaren Kammschwaders.

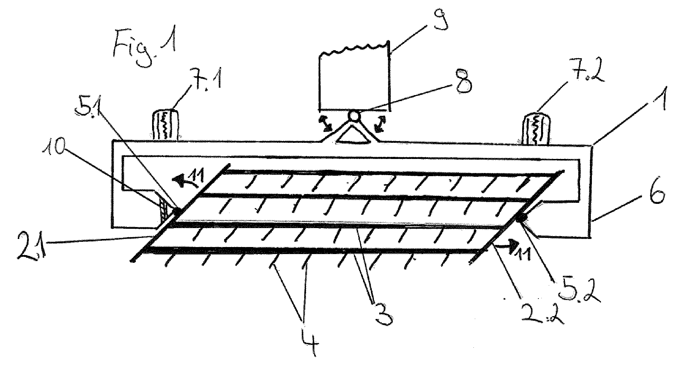

Das in Figur 1 schematisch dargestellte Ausführungsbeispiel eines erfindungsgemäßen schwenkbaren Kammschwaders 1 verfügt über einen Maschinenrahmen 6. Der Maschinenrahmen 6 wird über eine gelenkige Wirkverbindung 8 mit einer Antriebsmaschine 9 verbunden. Die gelenkige Wirkverbindung 8 ist derart geschaffen, dass der gesamte schwenkbare Kammschwader 1 in Bezug zur Antriebsmaschine 9 zu beiden Seiten in Fahrtrichtung schräg gestellt werden kann.

Der Maschinenrahmen 6 verfügt in diesem Ausführungsbeispiel über zwei Räder 7.1, 7.2, die den schwenkbaren Kammschwader 1 in einem vorgesehenen Abstand zu einem Feldboden halten und die gelenkige Wirkverbindung 8 zur Antriebsmaschine 9 entlasten. Je nach Größe erfüllt diesen Zweck auch nur ein Rad. Dabei kann die Positionierung des Rads oder der Räder an dem Maschinenrahmen 6 unterschiedlich sein. Die Positionierung und Anzahl der Räder ist abhängig von der Größe des Ausführungsbeispiels. Hier besteht der Vorteil der Gewichtsreduktion.

Die Räder 7.1 und 7.2 sind drehbeweglich gelagert, damit das Schwenken über die gelenkige Wirkverbindung 8 erfolgen kann. Darüber hinaus ist die Radaufhängung, welche Abbildungsbedingt nicht dargestellt ist, höhenverstellbar, damit eine Anpassung an ein Gelände erfolgen kann.

Im erfindungsgemäßen Ausführungsbeispiel ist ein erstes Funktionselement 2.1 mit einem weiteren Funktionselement 2.2 über eine Strebe 3 verbunden. Im hier gezeigten Ausführungsbeispiel sind die beiden Funktionselemente 2.1 und 2.2 durch vier Streben 3 miteinander verbunden. Die vier Streben 3 sind schwenkbar an den Funktionselementen 2.1 und 2.2 an den Positionen 3:00, 6:00, 9:00 und 12:00 Uhr angeordnet. Die gleichmäßig verteilte Anordnung kann in Anzahl der Streben und ihrer Positionierung variieren. Dies ist abhängig von der jeweiligen Ausführungsgröße des Kammschwaders.

An den vier Streben 3 sind Zinken 4 angeordnet, über welche das Halmgut rechenartig geschwadet wird. Diese Zinken 4 sind, dadurch dass sie in eine spiralfederähnlichen Abschnitt auslaufen, gefedert. Die Zinken 4 sind über wenige einfache Handgriffe austauschbar und können aus unterschiedlichen Materialien, wie Metall oder Kunststoff bestehen. Dies hat den Vorteil der optimalen Anpassung an die Arbeitsbedingungen die durch die Menge und die Art des zu schwadenden Halmguts vorgegeneben werden.

Die miteinander über vier Streben 3 verbundeneren Funktionselemente 2 und 2.1 sind über schwenkbare Drehgelenke 5.1 und 5.2 mit dem Maschinenrahmen 6 verbunden. Das erste Funktionselement 2.1 wird dabei über ein Umsetzgetriebe 10 durch die übertragene Kraft der Antriebsmaschine 9 in Rotationsbewegung versetzt. Das Umsetzgetriebe 10 ist in diesem Ausführungsbeispiel in das Drehgelenk 5.1 integriert. Eine beidseitige Kraftübertragung, etwa über das Drehgelenk 5.2 ist nicht notwendig.

Mittels der schwenkbaren Drehgelenke 5.1 und 5.2 ist es möglich die beiden Funktionselemente 2.1 und 2.2 um vorzugsweise 90 Grad von ihrer Ausgangsstellung aus zu schwenken; siehe Pfeilrichtung. Durch die Schwenkmöglichkeit kann die Auswurfseite des zu schwadenden Halmguts verändert werden. Dadurch entsteht der Vorteil, dass bei einer Fahrtrichtung die Wahl zwischen zwei Arbeitsrichtungen besteht, bzw. diese gewechselt werden kann. Dadurch ist eine rückwärtige Fahrt, um das Halmgut entsprechende zu Schwaden, nicht mehr nötig.

**Bezugszeichenliste**

| | | | | | |
|---|---|---|---|---|---|
| 1 | Schwenkbarer Kammschwader | 34 | | 67 | |
| 2.1 | erstes Funktionselement | 35 | | 68 | |
| 3 | Streben | 36 | | 69 | |
| 4 | Zinken | 37 | | 70 | |
| 5.1 | schwenkbares Drehgelenk | 38 | | 71 | |
| 6 | Maschinenrahmen | 39 | | 72 | |
| 7.1 | Rad | 40 | | 73 | |
| 8 | Gelenk zur Antriebsmaschine | 41 | | 74 | |
| 9 | Antriebsmasch ine | 42 | | 75 | |
| 10 | Umsetzgetriebe | 43 | | 76 | |
| 11 | Schwenkrichtung | 44 | | 77 | |
| 2.2 | zweites Funktionselement | 45 | | 78 | |
| 5.2 | schwenkbares Drehgelenk | 46 | | 79 | |
| 7.2 | Rad | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Kammschwader (1) mit einem Maschinenrahmen (6), wobei in dem Maschinenrahmen (6) ein erstes rotierendes Funktionselement (2.1) angeordnet ist, wobei das erste Funktionselement (2.1) zu dem Maschinenrahmen (6) in einer ersten Schrägposition gelagert ist,
**dadurch gekennzeichnet, dass**
eine zweite Schrägposition einstellbar ist.

2. Kammschwader (1) nach Anspruch 1, **dadurch gekennzeichnet, dass** der Maschinenrahmen (6) mit einer Antriebsmaschine (9) über ein Gelenk (8) wirkverbindbar ist.

3. Kammschwader (1) nach einem der vorherigen Ansprüche, **dadurch gekennzeichnet, dass** das Funktionselement (2.1) über ein Umsetzgetriebe (10) mit einem Antriebsmaschine (9) in Wirkverbindung steht.

4. Kammschwader (1) nach einem der vorigen Ansprüche, **dadurch gekennzeichnet, dass** der Maschinenrahmen (6) über ein Rad (7.1) verfügt.

5. Kammschwader (1) nach einem der vorigen Ansprüche, **dadurch gekennzeichnet, dass** das erste Funktionselement (2.1) und ein weiteres Funktionselement (2.2) über eine schwenkbare Strebe (3) miteinander verbunden sind.

6. Kammschwader (1) nach Anspruch 5, **dadurch gekennzeichnet, dass** die Strebe (3) eine Zinke (4) umfasst.

7. Kammschwader (1) nach Anspruch 6, **dadurch gekennzeichnet, dass** die Zinken (4) austauschbar sind.

8. Verwendung des Kammschwaders (1) nach den Ansprüchen 1 bis 7, **dadurch gekennzeichnet, dass** als Antriebsmaschine (9) Traktoren, Einachachsgeräteträger, Quads oder andere landwirtschaftlichen Maschinen zu Einsatz kommen, wobei sowohl Front- als auch Heckbetrieb möglich sind.
